# EUROPÄISCHE PATENTSCHRIFT

(11) **EP 3 568 532 B1**
(45) Veröffentlichungstag und Bekanntmachung des Hinweises auf die Patenterteilung: **12.01.2022**
(21) Anmeldenummer: 18704405.2
(22) Anmeldetag: 16.01.2018
(51) Int. Cl.: E03C 1/04

(54) **UNTERPUTZEINBAUKÖRPER FÜR EINE SANITÄRARMATUR MIT ZUMINDEST EINEM VARIABEL POSITIONIERBAREN DRUCKKNOPF**
FLUSH MOUNTED BUILT-IN BODY FOR A SANITARY FITTING WITH AT LEAST ONE PUSH BUTTON WHICH CAN BE VARIABLY POSITIONED
CORPS ENCASTRÉ POUR RACCORD SANITAIRE COMPORTANT AU MOINS UN BOUTON-POUSSOIR À POSITION VARIABLE

(30) Priorität: 16.01.2017 DE 102017100708
(43) Veröffentlichungstag der Anmeldung: 20.11.2019
(73) Patentinhaber: Grohe AG, 58653 Hemer (DE)
(72) Erfinder: BERGHOFF, Daniel, 44229 Dortmund (DE); TOYODA, Yukiko, 58675 Hemer (DE)
(86) Internationale Anmeldenummer: PCT/EP2018/050960
(87) Internationale Veröffentlichungsnummer: WO 2018/130708

(56) Entgegenhaltungen:
- CH-A- 395 880
- DE-A1-102013 017 233
- DE-U1-202015 006 285
- GB-A- 1 292 045
- US-A- 3 590 860
- US-A1- 2015 115 183

## Beschreibung

Die vorliegende Erfindung betrifft einen Unterputzeinbaukörper für eine Sanitärarmatur, der innerhalb eines Mauerdurchbruchs, einer Vertiefung in einer Wand oder einem sonstigen Träger befestigbar ist. Insbesondere bei Einbauwänden und Vorwandsystemen haben sich solche Unterputzeinbaukörper bewährt.

Unterputzeinbaukörper dienen der Befestigung einer Funktionseinheit in einer Mauer, Wand oder einem Träger. Die Funktionseinheit kann eine Thermostatkartusche und/oder ein Ventil umfassen. Mittels der Thermostatkartusche sind ein Kaltwasser und ein Warmwasser zu einem Mischwasser mit einer gewünschten Mischwassertemperatur mischbar, wobei eine Entnahmemenge des Mischwassers mittels des Ventils steuerbar ist. An den Unterputzeinbaukörper ist zumindest eine Mischwasserleitung anschließbar, über die das Mischwasser der Sanitärarmatur, wie zum Beispiel einer Handbrause, Kopfbrause, Düse, Auslauf und/oder dergleichen an einer Dusche und/oder Badewanne, zuführbar ist. Der Kaltwasseranschluss ist regelmäßig mit einem Kaltwasserhausanschluss und der Warmwasseranschluss regelmäßig mit einem Warmwasserhausanschluss über entsprechende Rohrleitungen verbunden. Bei unterschiedlichen Einbautiefen der Unterputzeinbaukörper in der Wand, Mauer oder dem Träger können Druccknöpfe und Drehgriffe zur Betätigung der Unterputzeinbaukörper unterschiedlich weit aus der Wand ragen. Hierdurch ist kein einheitliches äußeres Erscheinungsbild der Druckknöpfe und Drehgriffe nach der Montage der Unterputzeinbaukörper in der Wand gewährleistbar. Zudem können bei einem nicht exakten Einbau der Unterputzeinbaukörper Anschlagskräfte beziehungsweise Biegemomente auf die Druckknöpfe und Drehgriffe eingeleitet werden. Hierdurch können zwischen den Druckknöpfen und Drehgriffen beziehungsweise zwischen den Drehgriffen und einer Abdeckung des Unterputzeinbaukörpers Spalte auftreten, die die Optik beeinträchtigen. Aus der Druckschrift US2015/0115183A1 ist ein Ventil mit einem Druckknopf bekannt, wobei ein Verdrehen des Druckknopfes zu einer Einstellung einer Wasserflussrate führt und ein Drücken des Druckknopfes zum Einschalten bzw. Ausschalten des Wasserflusses führt.

Aufgabe der Erfindung ist daher, die mit Bezug auf den Stand der Technik geschilderten Probleme zumindest teilweise zu lösen und insbesondere einen Unterputzeinbaukörper für eine Sanitärarmatur anzugeben, deren Druckknöpfe oder Drehgriffe auf unterschiedliche Einbautiefen des Unterputzeinbaukörpers einstellbar sind.

Diese Aufgabe wird gelöst mit einem Unterputzeinbaukörper gemäß den Merkmalen des unabhängigen Patentanspruchs. Weitere vorteilhafte Ausgestaltungen des Unterputzeinbaukörpers sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierfür trägt ein Unterputzeinbaukörper für eine Sanitärarmatur bei, der zumindest die folgenden Komponenten aufweist:
a) zumindest ein Ventil für eine Flüssigkeit mit einem drehbaren Mengenregulierteil und einem Gewindeschaft, wobei der Gewindeschaft zum Öffnen und Schließen des zumindest einen Ventils in eine axiale Richtung des zumindest einen Ventils betätigbar ist,
b) zumindest ein Druckknopf zum Betätigen des Gewindeschafts des zumindest einen Ventils in der axialen Richtung, wobei der zumindest eine Druckknopf ein mit dem Gewindeschaft verschraubbares Zwischenteil zur Einstellung einer gewünschten Position des zumindest einen Druckknopfs in der axialen Richtung und eine verdrehfest mit dem Ge windeschaft verbindbare Abdeckkappe zur Sicherung des Zwischenteils in der gewünschten Position umfasst, und
c) zumindest einen Drehgriff zur Einstellung einer Durchflussmenge der Flüssigkeit, wobei der zumindest eine Drehgriff verdrehfest mit dem Mengenregulierteil des zumindest einen Ventils verbunden ist.

Der Unterputzeinbaukörper wird insbesondere für Sanitärarmaturen verwendet, die im Zusammenhang mit Duschen und/oder Badewannen zur Anwendung kommen. Bei den Sanitärarmaturen kann es sich insbesondere um Wasserausläufe, Handbrausen, Düsen und/oder dergleichen handeln. Der Unterputzeinbaukörper dient insbesondere der Befestigung einer Funktionseinheit. Die Funktionseinheit umfasst insbesondere eine Thermostatkartusche oder andere Mischeinrichtungen, wie zum Beispiel manuelle Mischer. Mittels der Thermostatkartusche sind insbesondere ein Kaltwasser und ein Warmwasser zu einem Mischwasser mit einer gewünschten Mischwassertemperatur mischbar. Das Kaltwasser kann dabei eine Kaltwassertemperatur aufweisen, die insbesondere maximal 25 °C (Celsius), bevorzugt 1 °C bis 25 °C, besonders bevorzugt 5 °C bis 20 °C beträgt. Das Warmwasser kann eine Warmwassertemperatur aufweisen, die insbesondere maximal 90 °C, bevorzugt 25 °C bis 90 °C, besonders bevorzugt 55 °C bis 65 °C beträgt. Die Funktionseinheit ist insbesondere zumindest teilweise in einem Aufnahmeraum eines Gehäuses des Unterputzeinbaukörpers angeordnet und/oder ist im Wesentlichen zylinderförmig ausgebildet. Solche Unterputzeinbaukörper werden regelmäßig innerhalb eines Mauerdurchbruchs, einer Vertiefung in einer Wand oder einem sonstigen Träger befestigt.

Weiterhin weist der Unterputzeinbaukörper zumindest ein Ventil für eine Flüssigkeit auf. Das zumindest eine Ventil kann ebenfalls Bestandteil der Funktionseinheit sein. Bei der Flüssigkeit handelt es sich insbesondere um das durch die Thermostatkartusche gemischte Mischwasser. Das Mischwasser kann von der Thermostatkartusche beispielsweise mit zumindest einer Leitung in der Funktionseinheit dem zumindest einen Ventil zugeführt werden, mittels dem ein Volumenstrom beziehungsweise eine Durchflussmenge des Mischwassers über die Sanitärarmatur steuerbar ist. Das zumindest eine Ventil weist ein drehbares Mengenregulierteil auf, mit dem eine Durchflussmenge der Flüssigkeit durch das zumindest eine Ventil steuerbar ist. Mittels des drehbaren Mengenregulierteils ist somit der Volumenstrom beziehungsweise die Durchflussmenge der Flüssigkeit über die Sanitärarmatur einstellbar. Weiterhin weist das zumindest eine Ventil einen Gewindeschaft auf, der zum Öffnen und Schließen des zumindest einen Ventils in eine axiale Richtung des zumindest einen Ventils betätigbar ist. Dies bedeutet insbesondere, dass der Gewindeschaft in der axialen Richtung des zumindest einen Ventils zwei stabile Positionen aufweist, zwischen denen der Gewindeschaft verstellbar ist. In der einen stabilen Position ist das zumindest eine Ventil zumindest teilweise oder vollständig geöffnet und in der anderen stabilen Position vollständig geschlossen. Die axiale Richtung verläuft insbesondere parallel zu einer Drehachse des drehbaren Mengenregulierteils des zumindest einen Ventils. Der Gewindeschaft ist insbesondere zu einem Ventilgehäuse verdrehfest ausgebildet. Für eine grobe Einstellung der Tiefe des Unterputzeinbaukörpers kann der Gewindeschaft nach der Montage des Unterputzeinbaukörpers gekürzt beziehungsweise abgesägt werden.

Der Unterputzeinbaukörper weist zumindest einen Druckknopf zum Betätigen des Gewindeschafts des zumindest einen Ventils in der axialen Richtung auf. Dies bedeutet insbesondere, dass mit dem zumindest einen Druckknopf der Gewindeschaft des zumindest einen Ventils in der axialen Richtung zwischen den beiden stabilen Positionen des Gewindeschafts verstellbar ist. Durch den zumindest einen Druckknopf kann somit ein Benutzer der Sanitärarmatur ein Ausfließen der Flüssigkeit aus der Sanitärarmatur starten und beenden. Der zumindest eine Druckknopf weist ein Zwischenteil und eine Abdeckkappe auf. Das Zwischenteil ist insbesondere ringförmig ausgebildet und/oder mit dem Gewindeschaft zur Einstellung einer gewünschten Position des zumindest einen Druckknopfs in der axialen Richtung verschraubbar. Dies bedeutet mit anderen Worten, dass mittels des Zwischenteils ein Abstand in der axialen Richtung zwischen dem zumindest einen Ventil und dem zumindest einen Druckknopf in Abhängigkeit einer Einbautiefe des Unterputzeinbaukörpers in einer Wand einstellbar ist. Je weiter das Zwischenteil auf den Gewindeschaft aufgeschraubt ist, desto geringer ist der Abstand in der axialen Richtung zwischen dem zumindest einen Ventil und dem zumindest einen Druckknopf. Die Abdecckappe des zumindest einen Druckknopfs ist verdrehfest mit dem Gewindeschaft verbindbar, sodass das Zwischenteil in der gewünschten Position auf dem Gewindeschaft gesichert ist. Die Abdeckkappe verhindert nach ihrer Verbindung mit dem Gewindeschaft ein Verdrehen des Zwischenteils an dem Gewindeschaft, sodass das Zwischenteil nicht weiter auf den Gewindeschaft aufschraubbar und/oder abschraubbar ist. Die Abdeckkappe sichert daher das Zwischenteil vor einer Verstellung gegenüber dem Gewindeschaft in der axialen Richtung. Hierdurch wird ein konstanter Abstand aller sichtbaren Teile des Unterputzeinbaukörpers zueinander ermöglicht. Die Anmutung und Bedienbarkeit werden durch verschieden tiefe Einbaulagen des Unterputzeinbaukörpers nicht beeinträchtigt. Zudem kann die Lage des zumindest einen Druckknopfs gegenüber zumindest einem Drehgriff bezogen auf eine Drehachse des zumindest einen Drehgriffs sehr fein eingestellt werden. So kann gewährleistet werden, dass die Oberkanten des zumindest einen Druckknopfs und des zumindest einen Drehgriffs im Rahmen der zulässigen Einbautiefen des Unterputzeinbaukörpers bündig zueinander angeordnet sind. Der zumindest eine Drehgriff dient insbesondere der Einstellung einer Durchflussmenge der Flüssigkeit. Hierzu ist der zumindest eine Drehgriff verdrehfest mit dem Mengenregulierteil des zumindest einen Ventils verbunden. Der zumindest eine Drehgriff ist insbesondere zumindest teilweise rohrförmig ausgebildet, sodass der zumindest eine Druckknopf in dem zumindest einen Drehgriff anordenbar ist. Mit anderen Worten umgibt der zumindest eine Drehgriff insbesondere den zumindest einen Druckknopf.

Ebenfalls vorteilhaft ist es, wenn der Gewindeschaft ein erstes Gewinde und das Zwischenteil ein zweites Gewinde aufweisen. Bei dem ersten Gewinde des Gewindeschafts handelt es sich insbesondere um ein Außengewinde und/oder bei dem zweiten Gewinde des Zwischenteils insbesondere um ein Innengewinde. Das Zwischenteil ist mit dem zweiten Gewinde auf das erste Gewinde des Gewindeschafts schraubbar.

Weiterhin ist es vorteilhaft, wenn das Zwischenteil eine erste Verzahnung und die Abdeckkappe eine zweite Verzahnung aufweisen. Wenn die Abdeckkappe verdrehfest mit dem Gewindeschaft verbunden ist, greift die erste Verzahnung des Zwischenteils in die zweite Verzahnung der Abdeckkappe, sodass das Zwischenteil relativ zu der Abdeckkappe nicht verdrehbar ist. Die erste Verzahnung ist insbesondere an einer Stirnseite des Zwischenteils und/oder die zweite Verzahnung insbesondere an einer Stirnseite der Abdeckkappe ausgeführt.

Ebenfalls vorteilhaft ist es, wenn das Zwischenteil eine äußere Umfangsfläche aufweist, mittels der der zumindest eine Druckknopf in dem zumindest einen Drehgriff geführt ist und auf der der zumindest eine Drehgriff bei einer Drehung des zumindest einen Drehgriffs gleitet. Die äußere Umfangsfläche weist insbesondere einen Außendurchmesser auf, der im Wesentlichen einem Innendurchmesser einer inneren Umfangsfläche des Drehgriffs entspricht. Das Zwischenteil und die Abdeckkappe des zumindest einen Druckknopfs drehen sich bei einer Drehung des zumindest einen Drehgriffs nicht mit dem zumindest einen Drehgriff mit, sondern der zumindest eine Drehgriff gleitet mit seiner inneren Umfangsfläche auf der äußeren Umfangsfläche des Zwischenteils des zumindest einen Druckknopfs.

Vorzugsweise weist die Abdeckkappe eine erste Nase auf, mit der die Abdeckkappe verdrehfest in eine Öffnung des Gewindeschafts einsteckbar ist. Die erste Nase der Abdeckkappe erstreckt sich insbesondere in die axiale Richtung. Die erste Nase kann beispielsweise einen mehreckigen, viereckigen oder rechteckigen Querschnitt aufweisen. Die Öffnung des Gewindeschafts ist insbesondere in einer Stirnseite des Gewindeschafts und/oder in die axiale Richtung ausgebildet. Die Öffnung weist ebenfalls insbesondere einen mehreckigen, viereckigen oder rechteckigen Querschnitt auf. Die erste Nase der Abdeckkappe verschließt nach dem Einstecken in die Öffnung des Gewindeschafts die Öffnung des Gewindeschafts insbesondere im Wesentlichen vollständig.

Zudem ist es vorteilhaft, wenn das Mengenregulierteil eine zweite Nase aufweist, die in zumindest eine Nut des Drehgriffs einführbar ist. Die zumindest eine Nut ist insbesondere in einem Drehgriffunterteil und/oder einem Drehgriffoberteil des zumindest einen Drehgriffs ausgeführt.

Zudem erstreckt sich die zumindest eine Nut insbesondere in die axiale Richtung. Die zweite Nase des zumindest einen Mengenregulierteils des zumindest einen Ventils erstreckt sich ebenfalls bevorzugt in die axiale Richtung und ist in die zumindest eine Nut einführbar. Hierdurch wird eine Drehbewegung des zumindest einen Drehgriffs zur Einstellung der Durchflussmenge der Flüssigkeit auf das Mengenregulierteil des zumindest einen Ventils übertragen. Zudem ist die zweite Nase des Mengenregulierteils in der axialen Richtung in einer variablen Tiefe in die zumindest eine Nut des Drehgriffs einführbar, sodass unterschiedliche Einbautiefen des Unterputzeinbaukörpers ausgleichbar sind.

Des Weiteren ist es vorteilhaft, wenn die zweite Nase in eine erste Nut eines Drehgriffunterteils und in eine zweite Nut eines Drehgriffoberteils einführbar ist. Die erste Nut des Drehgriffunterteils und die zweite Nut des Drehgriffoberteils fluchten hierzu miteinander.

Weiterhin ist es vorteilhaft, wenn die zweite Nase in der axialen Richtung in die zumindest eine Nut einführbar ist.

Zudem ist es vorteilhaft, wenn die zweite Nase zur Einstellung einer gewünschten Position des Drehgriffs in der axialen Richtung beweglich in der zumindest einen Nut angeordnet ist.

Darüber hinaus ist es vorteilhaft, wenn der Unterputzeinbaukörper eine Trägerplatte mit einem Anschlag für den zumindest einen Drehgriff aufweist. Der Anschlag dient insbesondere der Begrenzung eines Drehwinkels des zumindest einen Drehgriffs. Bei dem Anschlag kann es sich insbesondere um einen Durchmessersprung einer Öffnung der Trägerplatte für den zumindest einen Drehgriff handeln.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: einen Unterputzeinbaukörper in einer perspektivischen Darstellung;
- Fig. 2:: eine Explosionsdarstellung eines Teils des Unterputzeinbaukörpers im Schnitt;
- Fig. 3:: einen Teil des Unterputzeinbaukörpers mit einem auf einen Gewindeschaft aufgeschraubten Zwischenteil eines Druckknopfs in einer Schnittdarstellung;
- Fig. 4:: den in der Fig. 3 gezeigten Teil des Unterputzeinbaukörpers, nachdem ein Drehgriff auf das Zwischenteil des Druckknopfs aufgesteckt wurde; und
- Fig. 5:: eine Trägerplatte des Unterputzeinbaukörpers in einer perspektivischen Darstellung.

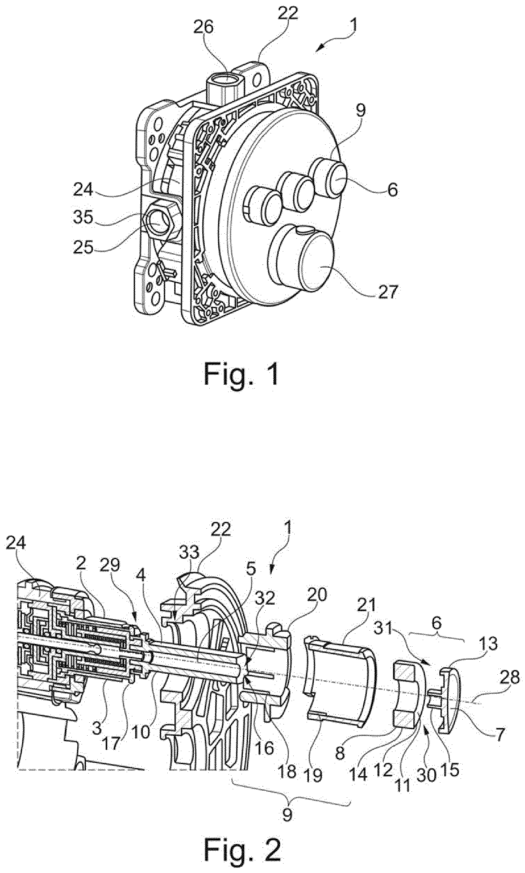

Die Fig. 1 zeigt einen Unterputzeinbaukörper 1 in einer perspektivischen Darstellung. Der Unterputzeinbaukörper 1 weist ein Gehäuse 24 mit einem Anschlussring 35 zum Anschluss von hier nicht gezeigten Kaltwasser- und Warmwasserzuleitungen sowie Mischwasserableitungen auf. Der Anschlussring 35 weist bei der gezeigten Ausführungsvariante drei Abläufe auf, von denen in der Fig. 1 nur ein erster Ablauf 25 und ein zweiter Ablauf 26 zu erkennen sind. Der Unterputzeinbaukörper 1 weist drei in dem Gehäuse 24 angeordnete und in der Fig. 1 nicht zu erkennende Ventile 2 auf, die jeweils durch einen Druckknopf 6 zum Öffnen und Schließen des jeweiligen Ventils 2 und einen Drehgriff 9 zur Einstellung einer Durchflussmenge einer Flüssigkeit durch das jeweilige Ventil 2 oder den jeweiligen Ablauf 25, 26 betätigbar sind. Weiterhin weist der Unterputzeinbaukörper 1 einen Drehknopf 27 zur Betätigung einer hier nicht gezeigten Thermostatkartusche des Unterputzeinbaukörpers auf. Mittels des Drehknopfs 27 ist eine Mischwassertemperatur eines durch die Thermostatkartusche gemischten Mischwassers einstellbar. Zudem weist der Unterputzeinbaukörper 1 eine auf das Gehäuse 24 aufsteckbare Trägerplatte 22 für die Druckknöpfe 6, die Drehgriffe 9 und den Drehknopf 27 auf. An die Trägerplatte 22 ist zudem eine (dekorative) Abdeckplatte für den Unterputzeinbaukörper befestigbar.

Die Fig. 2 zeigt einen Ausschnitt einer Explosionsdarstellung des Unterputzeinbaukörpers 1 im Schnitt. Zu erkennen ist eines der Ventile 2 in dem Gehäuse 24. An einer ersten Stirnseite 29 des im Wesentlichen zylinderförmigen Ventils 2 ist ein Gewindeschaft 4 gegenüber dem Ventil 2 verdrehfest eingeclipt. Der Gewindeschaft 4 ist in einer axialen Richtung 5 parallel zu einer Drehachse 28 eines Mengenregulierteils 3 zum Öffnen und Schließen des Ventils 2 verstellbar. Der Gewindeschaft 4 weist ein erstes Gewinde 10 auf, das nach Art eines Außengewindes ausgebildet ist. Auf das erste Gewinde 10 ist ein ringförmiges Zwischenteil 8 des Druckknopfs 6 mit einem zweiten Gewinde 11, das nach Art eines Innengewindes ausgebildet ist, schraubbar. Die Position des Druckknopfs 6 relativ zu dem Ventil 2 ist in Abhängigkeit zu einer Aufschraubtiefe in der axialen Richtung 5 auf den Gewindeschaft 4 des Ventils 2 einstellbar. Nach dem Aufschrauben des Zwischenteils 8 auf den Gewindeschaft 4 ist eine erste Nase 15 einer Abdecckappe 7 des Druckknopfs 6 in eine erste Öffnung 16 in einer vierten Stirnseite 32 des Gewindeschafts 4 verdrehfest in Bezug auf den Gewindeschaft 4 einsteckbar. Nach dem Einstecken der ersten Nase 15 der Abdeckkappe 7 in die erste Öffnung 16 des Gewindeschafts 4 greift eine zweite Verzahnung 13 an einer dritten Stirnseite 31 der Abdeckkappe 7 in eine erste Verzahnung 12 an einer zweiten Stirnseite 30 des Zwischenteils 8 ein, sodass das Zwischenteil 8 in der gewünschten Position an dem Gewindeschaft 4 gesichert ist. Hierdurch ist das Zwischenteil 8 gegenüber der Abdeckkappe 7 nicht verdrehbar, sodass das Zwischenteil 8 nicht weiter auf den Gewindeschaft 4 aufgeschraubt oder abgeschraubt werden kann. Der Gewindeschaft 4 ist in der axialen Richtung 5 durch ein Drücken auf die Abdeckkappe 7 durch einen Benutzer zum Öffnen und Schließen des Ventils 2 betätigbar. Der Drehgriff 9 umfasst ein Drehgriffunterteil 20 mit einer ersten Nut 18 und ein Drehgriffoberteil 21 mit einer zweiten Nut 19. In die erste Nut 18 und die zweite Nut 19 ist eine zweite Nase 17 des Mengenregulierteils 3 des Ventils 2 einführbar, sodass das Mengenregulierteil 3 durch den Drehgriff 9 um seine Drehachse 28 zur Einstellung der Durchflussmenge der Flüssigkeit durch das Ventil 2 drehbar ist. Die Trägerplatte 22 weist eine zweite Öffnung 33 auf, in die das Drehgriffunterteil 20 des Drehgriffs 9 einsteckbar ist. Das Drehgriffunterteil 20 ist in der zweiten Öffnung 33 der Trägerplatte 22 um die Drehachse 28 mit dem Drehgriffoberteil 21 drehbar.

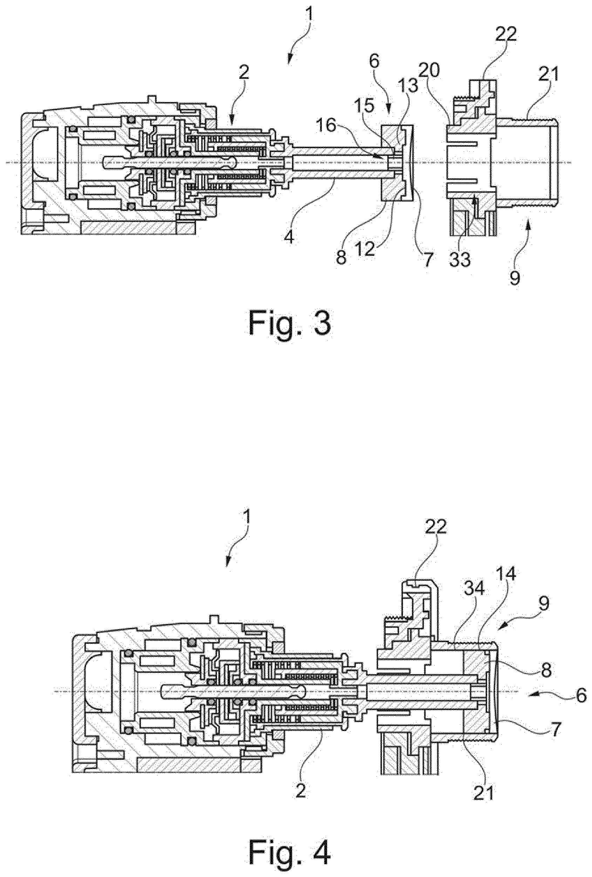

Die Fig. 3 zeigt den Unterputzeinbaukörper 1, nachdem das Zwischenteil 8 des Druckknopfs 6 auf den Gewindeschaft 4 geschraubt wurde. Die erste Nase 15 der Abdeckkappe 7 ist in die erste Öffnung 16 des Gewindeschafts 4 eingesteckt, sodass die erste Verzahnung 12 des Zwischenteils 8 mit der zweiten Verzahnung 13 der Abdeckkappe 7 in Eingriff steht. Hierdurch ist die Position des Zwischenteils 8 auf dem Gewindeschaft 4 des Ventils 2 gesichert. Das Drehgriffoberteil 21 ist mit dem Drehgriffunterteil 20 des Drehgriffs 9 verbunden und das Drehgriffunterteil 20 in die zweite Öffnung 33 der Trägerplatte 22 eingerastet.

Die Fig. 4 zeigt eine Teilansicht des Unterputzeinbaukörpers 1 im Bereich des Ventils 2 in einer Schnittdarstellung. In der Fig. 4 ist die Trägerplatte 22 mit dem Drehgriff 9 auf das Zwischenteil 8 und die Abdeckkappe 7 des Druckknopfs 6 aufgesteckt. Dabei wird der Druckknopf 6 durch eine äußere Umfangsfläche 14 des Zwischenteils 8 in dem Drehgriff 9 geführt, in dem die äußere Umfangsfläche 14 des Zwischenteils 8 mit einer inneren Umfangsfläche 34 des Drehgriffoberteils zur Anlage kommt. Bei einer Drehung des Drehgriffs 9 gleitet die innere Umfangsfläche 34 des Drehgriffoberteils 21 auf der äußeren Umfangsfläche 14 des Zwischenteils 8, ohne dass das Zwischenteil 8 oder die Abdeckkappe 7 des Druckknopfs 6 rotiert.

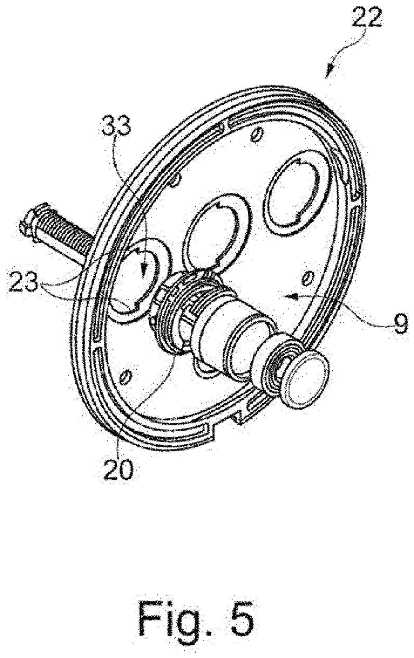

Die Fig. 5 zeigt die Trägerplatte 22 in einer perspektivischen Darstellung. Die drei zweiten Öffnungen 33 der Trägerplatte 22 weisen jeweils zwei Anschläge 23 auf, die mit dem Drehgriffunterteil 20 des Drehgriffs 9 zusammenwirken, sodass ein Drehwinkel des Drehgriffs 9 begrenzt ist. Die Anschläge 23 sind hier nach Art einer Durchmesserstufe der zweiten Öffnung 33 ausgebildet und sind relativ zu der in der Fig. 2 gezeigten Drehachse 28 um 180° versetzt zueinander angeordnet.

Die vorliegende Erfindung zeichnet sich insbesondere durch eine leichte Anpassbarkeit eines Druckknopfs und Drehgriffs an eine Einbautiefe eines Unterputzeinbaukörpers aus.

### Bezugszeichenliste

- 1: Unterputzeinbaukörper
- 2: Ventil
- 3: Mengenregulierteil
- 4: Gewindeschaft
- 5: axiale Richtung
- 6: Druckknopf
- 7: Abdeckkappe
- 8: Zwischenteil
- 9: Drehgriff
- 10: erstes Gewinde
- 11: zweites Gewinde
- 12: erste Verzahnung
- 13: zweite Verzahnung
- 14: äußere Umfangsfläche
- 15: erste Nase
- 16: erste Öffnung
- 17: zweite Nase
- 18: erste Nut
- 19: zweite Nut
- 20: Drehgriffunterteil
- 21: Drehgriffoberteil
- 22: Trägerplatte
- 23: Anschlag
- 24: Gehäuse
- 25: erster Ablauf
- 26: zweiter Ablauf
- 27: Drehknopf
- 28: Drehachse
- 29: erste Stirnseite
- 30: zweite Stirnseite
- 31: dritte Stirnseite
- 32: vierte Stirnseite
- 33: zweite Öffnung
- 34: innere Umfangsfläche
- 35: Anschlussring

## Patentansprüche

1. Unterputzeinbaukörper (1) für eine Sanitärarmatur, zumindest aufweisend:
a) zumindest ein Ventil (2) für eine Flüssigkeit mit einem drehbaren Mengenregulierteil (3) und einem Gewindeschaft (4), wobei der Gewindeschaft (4) zum Öffnen und Schließen des zumindest einen Ventils (2) in eine axiale Richtung (5) des zumindest einen Ventils (2) betätigbar ist,
b) zumindest ein Druckknopf (6) zum Betätigen des Gewindeschafts (4) des zumindest einen Ventils (2) in der axialen Richtung (5), wobei der zumindest eine Druckknopf (6) ein mit dem Gewindeschaft (4) verschraubbares Zwischenteil (8) zur Einstellung einer gewünschten Position des zumindest einen Druckknopfs (6) in der axialen Richtung (5) und eine verdrehfest mit dem Gewindeschaft (4) verbindbare Abdeckkappe (7) zur Sicherung des Zwischenteils (8) in der gewünschten Position umfasst, und
c) zumindest einen Drehgriff (9) zur Einstellung einer Durchflussmenge der Flüssigkeit, wobei der zumindest eine Drehgriff (9) verdrehfest mit dem Mengenregulierteil (3) des zumindest einen Ventils (2) verbunden ist.

2. Unterputzeinbaukörper (1) nach Patentanspruch 1, wobei der Gewindeschaft (4) ein erstes Gewinde (10) und das Zwischenteil (8) ein zweites Gewinde (11) aufweisen.

3. Unterputzeinbaukörper (1) nach einem der vorhergehenden Patentansprüche, wobei das Zwischenteil (8) eine erste Verzahnung (12) und die Abdeckkappe (7) eine zweite Verzahnung (13) aufweisen.

4. Unterputzeinbaukörper (1) nach einem der vorhergehenden Patentansprüche, wobei das Zwischenteil (8) eine äußere Umfangsfläche (14) aufweist, mittels der der zumindest eine Druckknopf (6) in dem zumindest einen Drehgriff (9) geführt ist und auf der der zumindest eine Drehgriff (9) bei einer Drehung des zumindest einen Drehgriffs (9) gleitet.

5. Unterputzeinbaukörper (1) nach einem der vorhergehenden Patentansprüche, wobei die Abdeckkappe (7) eine erste Nase (15) aufweist, mit der die Abdeckkappe (7) verdrehfest in eine erste Öffnung (16) des Gewindeschafts (4) einsteckbar ist.

6. Unterputzeinbaukörper (1) nach einem der vorhergehenden Patentansprüche, wobei das Mengenregulierteil (3) eine zweite Nase (17) aufweist, die in zumindest eine Nut (18, 19) des Drehgriffs (9) einführbar ist.

7. Unterputzeinbaukörper (1) nach Patentanspruch 6, wobei die zweite Nase (17) in eine erste Nut (18) eines Drehgriffunterteils (20) und in eine zweite Nut (19) eines Drehgriffoberteils (21) einführbar ist.

8. Unterputzeinbaukörper (1) nach einem der Patentansprüche 6 oder 7, wobei die zweite Nase (17) in der axialen Richtung (5) in die zumindest eine Nut (18, 19) einführbar ist.

9. Unterputzeinbaukörper (1) nach einem der Patentansprüche 6 bis 8, wobei die zweite Nase (17) zur Einstellung einer gewünschten Position des Drehgriffs (9) in der axialen Richtung (5) beweglich in der zumindest einen Nut (18, 19) angeordnet ist.

10. Unterputzeinbaukörper (1) nach einem der vorhergehenden Patentansprüche, aufweisend eine Trägerplatte (22) mit einem Anschlag (23) für den zumindest einen Drehgriff (9).

## Claims

1. A flush mounted built-in body (1) for a sanitary fitting, comprising at least:
a) at least one valve (2) for a liquid, with a rotatable flow regulator (3) and a threaded shaft (4), wherein the threaded shaft (4) can be actuated for opening and closing the at least one valve (2) in an axial direction (5) of the at least one valve (2),
b) at least one push button (6) for actuating the threaded shaft (4) of the at least one valve (2) in the axial direction (5), wherein the at least one push button (6) comprises an intermediate part (8) screwable to the threaded shaft (4) for setting a desired position of the at least one push button (6) in the axial direction (5) and a cover cap (7) that can be connected to the threaded shaft (4) in a rotationally fixed manner for securing the intermediate part (8) in the desired position, and
c) at least one rotating knob (9) for adjusting the flow of the liquid, wherein the at least one rotating knob (9) is connected to the flow regulator (3) of the at least one valve (2) in a rotationally fixed manner.

2. The flush mounted built-in body (1) according to patent claim 1, wherein the threaded shaft (4) has a first thread (10) and the intermediate part (8) has a second thread (11).

3. The flush mounted built-in body (1) according to any one of the preceding patent claims, wherein the intermediate part (8) has a first toothing (12) and the cover cap (7) has a second toothing (13).

4. The flush mounted built-in body (1) according to any one of the preceding patent claims, wherein the intermediate part (8) has an outer circumferential surface (14) by means of which the at least one push button (6) is guided in the at least one rotating knob (9) and on which the at least one rotating knob (9) slides when the at least one rotating knob (9) is rotated.

5. The flush mounted built-in body (1) according to any one of the preceding patent claims, wherein the cover cap (7) has a first lug (15) with which the cover cap (7) can be inserted into a first opening (16) of the threaded shaft (4) in a rotationally fixed manner.

6. The flush mounted built-in body (1) according to any one of the preceding claims, wherein the flow regulator (3) has a second lug (17) which can be inserted into at least one groove (18, 19) of the rotating knob (9).

7. The flush mounted built-in body (1) according to claim 6, wherein the second lug (17) can be inserted into a first groove (18) of a rotating knob lower part (20) and into a second groove (19) of a rotating knob upper part (21).

8. The flush mounted built-in body (1) according to any one of patent claims 6 or 7, wherein the second lug (17) can be inserted in the axial direction (5) into the at least one groove (18, 19).

9. The flush mounted built-in body (1) according to any one of patent claims 6 to 8, wherein the second lug (17) is arranged movably in the at least one groove (18, 19) for setting a desired position of the rotating knob (9) in the axial direction (5).

10. The flush mounted built-in body (1) according to any one of the preceding patent claims, comprising a support plate (22) with a stop (23) for the at least one rotating knob (9).

## Revendications

1. Élément encastrable (1), destiné à une robinetterie sanitaire, comportant au moins :
a) au moins une soupape (2) pour un liquide, dotée d'une pièce régulatrice de débit (3) rotative et d'une tige filetée (4), la tige filetée (4) étant actionnable dans la direction (5) axiale de l'au moins une soupape (2), pour ouvrir et fermer l'au moins une soupape (2),
b) au moins un bouton-poussoir (6), destiné à actionner dans la direction (5) axiale la tige filetée (4) de l'au moins une soupape (2), l'au moins un bouton-poussoir (6) comprenant une pièce intercalaire (8) susceptible d'être vissée sur la tige filetée (4), pour le réglage d'une position souhaitée de l'au moins un bouton-poussoir (6) dans la direction (5) axiale et un capuchon protecteur (7) susceptible d'être relié de manière solidaire en rotation avec la tige filetée (4), pour sécuriser la pièce intercalaire (8) dans la position souhaitée, et
c) au moins une poignée rotative (9), pour le réglage d'un débit du liquide, l'au moins une poignée rotative (9) étant reliée de manière solidaire en rotation avec la pièce régulatrice de débit (3) de l'au moins une soupape (2).

2. Élément encastrable (1) selon la revendication 1, la tige filetée (4) comportant un premier filetage (10) et la pièce intercalaire (8) comportant un deuxième filetage (11).

3. Élément encastrable (1) selon l'une quelconque des revendications précédentes, la pièce intercalaire (8) comportant une première denture (12) et le capuchon protecteur (7) comportant une deuxième denture (13).

4. Élément encastrable (1) selon l'une quelconque des revendications précédentes, la pièce intercalaire (8) comportant une surface périphérique (14) extérieure, au moyen de laquelle l'au moins un bouton-poussoir (6) est guidé dans l'au moins une poignée rotative (9) et sur laquelle l'au moins une poignée rotative (9) coulisse lors d'une rotation de l'au moins une poignée rotative (9).

5. Élément encastrable (1) selon l'une quelconque des revendications précédentes, le capuchon protecteur (7) comportant un premier bec (15), par lequel le capuchon protecteur (7) est insérable de manière solidaire en rotation dans un premier orifice (16) de la tige filetée (4).

6. Élément encastrable (1) selon l'une quelconque des revendications précédentes, la pièce régulatrice de débit (3) comportant un deuxième bec (17), qui peut s'introduire dans au moins une rainure (18, 19) de la poignée rotative (9).

7. Élément encastrable (1) selon la revendication 6, le deuxième bec (17) pouvant s'introduire dans une première rainure (18) d'une partie inférieure (20) de la poignée rotative et dans une deuxième rainure (19) d'une partie supérieure (21) de la poignée rotative.

8. Élément encastrable (1) selon l'une quelconque des revendications 6 ou 7, le deuxième bec (17) pouvant s'introduire dans la direction axiale (5) dans l'au moins une rainure (18, 19).

9. Élément encastrable (1) selon l'une quelconque des revendications 6 à 8, pour le réglage d'une position souhaitée de la poignée rotative (9), le deuxième bec (17) étant placé dans l'au moins une rainure (18, 19) en étant mobile dans la direction axiale (5).

10. Élément encastrable (1) selon l'une quelconque des revendications précédentes, comportant une plaque de support (22) dotée d'une butée (23) pour l'au moins une poignée rotative (9).
